Europäisches Patentamt

European Patent Office

Office européen des brevets

(11) Publication number: **0 168 653**
**A1**

## EUROPEAN PATENT APPLICATION

(21) Application number: **85107473.2**

(22) Date of filing: **15.06.85**

(51) Int. Cl.⁴: **F 16 L 41/08,** F 16 L 41/00

(30) Priority: **18.07.84 US 631920**

(43) Date of publication of application: **22.01.86 Bulletin 86/4**

(84) Designated Contracting States: **DE FR GB IT**

(71) Applicant: **Deutsche ITT Industries GmbH, Hans-Bunte-Strasse 19 Postfach 840, D-7800 Freiburg (DE)**

(84) Designated Contracting States: **DE**

(71) Applicant: **ITT INDUSTRIES INC., 320 Park Avenue, New York, NY 10022 (US)**

(84) Designated Contracting States: **FR GB IT**

(72) Inventor: **Gibbs, Glen Arthur, 27250 Audrey, Warren Michigan 48092 (US)**
Inventor: **Krause, Randy Walter, 876 East Gunn Road, Rochester Michigan 48063 (US)**
Inventor: **Everett, Jerry Wayne, 6748 Donnybrook, Utica Michigan 48087 (US)**

(74) Representative: **Grau, Ulf, c/o ALFRED TEVES GMBH Guerickestrasse7, D-6000 Frankfurt (M) 90 (DE)**

(54) **Joint assembly for small diameter tubing.**

(57) A joint assembly for small diameter tubing comprising a continuous tube (1) having a 180° bend therein and a branch tube (3). The branch tube (3) contains fingers (6, 6') projecting from opposite sides thereof which substantially completely encircle the continuous tube (1) and mechanically lock the branch tube (3) in fixed position at the apex of the bend of the continuous tube (1). The branch tube (3) is then brazed to the continuous tube (1) to form a gas tight connection (7). The joint is economical to fabricate and has substantially no projections to interfere with other components fitting within the bend of the continuous tube (1).

## JOINT ASSEMBLY FOR

## SMALL DIAMETER TUBING

This invention relates to a joint assembly for small diameter tubing and to a process for forming such a joint assembly.

Small diameter tubing, and particularly aluminum tubing, is widely used for condensers and evaporaters for air conditioning and refrigeration applications. Such tubing, typically having a diameter of about 3/8 of an inch/ (0.95 cm) normally contains both a number of bends and turns and a number of branch tubes extending from a main or continuous tube. The junction of the continuous and branch tube must be mechanically joined and then brazed or soldered to form a gas tight seal. Aluminum is a difficult metal to braze and there must be no movement during the brazing operations. To avoid the use of holding fixtures during the brazing operation, the branch tube must accordingly be mechanically locked in position prior to the brazing or soldering operation.

U.S. Patent 3,497,245, which issued on February 24, 1970 and is assigned to the present assignee, discloses a tubing joint in which a main tube fits through an opening in a branch tube, the end of the branch tube is then crimped and the assembly is soldered or brazed in position. This technique of forming a junction or joint for tubing has many advantages in economy and simplicity over previous joining techniques and has been extensively used. However, it also has certain disadvantages. This technique requires the threading of a main tube through the opening in a branch tube and this creates certain difficulties in manufacturing operations, particularly if the main tube contains sharp bends. The technique cannot be used at all when the main tube contains a $180^{o}$ hair pin loop. Moreover, the end of the branch tube must be crimped to mechanically lock the branch tube in place. The crimped portion creates a protuberance beyond the joint which frequently interferes with other components intended for assembly within the loop. An additional limitation of the foregoing technique is that in practice it has been found to require a mandrel inside the main tube to support the tube during the piercing operation. This requirement restricts the length of the tube which may be used. One means of avoiding certain of the foregoing drawbacks is by use of a saddle joint. However, saddle joints of the type disclosed in the prior art are incapable of forming a sufficiently tight mechanical lock to braze aluminum tubing.

The present invention provides a joint assembly for small diameter tubing which overcomes the foregoing disadvantages of prior art joint assemblies. The joint assembly of the invention provides a firm mechanical lock prior to brazing, does not require threading of one tube through a second tube and has essentially no protuberances on the exterior surfaces of the joint. Moreover, the process of its fabrication is relatively simple and therefore provides manufacturing economies.

The joint assembly of the invention comprises a continuous tube extending through a joint location, the continuous tube having an opening in a lateral wall, and a branch tube extending at an angle from the continuous tube at the joint location. Diametrically opposite fingers project from an expanded terminal portion of the branch tube at the joint location and substantially completely encircle and mechanically lock the branch tube in fixed position at the joint location, the opposite fingers being substantially flush with the outer surface of the continuous tube. The branch tube is metallically sealed to the continuous tube, as by brazing or soldering, to form a gas tight connection.

0168653

In the process of the invention, the diametrically opposite fingers are formed on the expanded terminal portion of the branch tube by forming a recess between opposite sides of the terminal portion of the branch tube, the recess having a depth slightly greater than the diameter of the continuous tube. The branch tube is then mechanically locked in fixed position to the continuous tube by substantially completely encircling the continuous tube with the fingers of the branch tube and finally the assembly is brazed or soldered to form a gas tight seal.

The invention will be better understood by reference to the accompanying drawing in which the various figures illustrate the sequential steps of the invention:

FIGS. 1-3 show respectively a portion of a continuous tube intended to accomodate a joint, the tube bent into a $180^{o}$ arc and the bent tube having an opening cut into a lateral wall at the apex of the bend;

FIGS. 4-6 show respectively a portion of a branch tube, the branch tube expanded at a terminal portion and the terminal portion pierced to formed a recess therein;

FIG. 7 shows the continuous tube and branch tube in assembled position prior to locking;

FIG. 8 is a crossection along the lines 8-8 of FIG. 7;

FIG. 9 shows the assembled tubes in mechanically locked position;

FIG. 10 is a crossection along the lines 10-10 of FIG. 9; and

FIG. 11 shows the mechanically locked and brazed joint assembly.

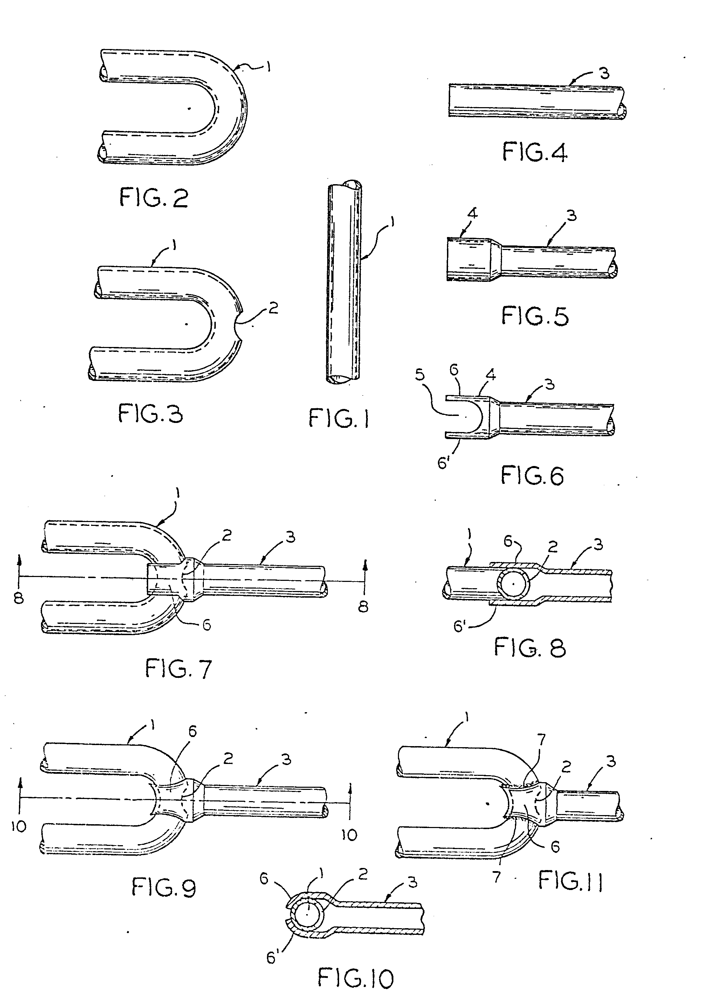

Referring to the drawing, a continuous tube 1, preferably of an aluminum alloy and typically having an outer diameter of 3/8/inch, (0,95 cm) is bent to form a $180^{o}$ bend as shown in Fig. 2. By continuous tube is meant a tube which extends in both directions beyond the joint location in contrast to a branch tube which terminates at the joint. The bent tube is then skived to form an opening 2 in its outer lateral wall at the apex of the bend.  The skive may be made by a suitable punching or drilling operation.  The opening 2 has a shape and size corresponding to the inner diameter of a branch tube 3. The branch tube 3, typically of the same outer diameter as the continuous tube 1, is expanded at 4 on its terminal portion so that the expanded terminal portion has a diameter slightly larger than the remainder of the branch tube.  Normally the inner diameter of the expanded terminal portion 4 should be approximately the same as the outer diameter of the continuous tube 1.  The branch tube is then pierced by a suitable piercing operation to form a recess 5 extending through to opposite sides of the terminal portion 4 of the tube.  The recess has a depth slightly greater than the outer diameter of the continuous tube 1.  The formation of the recess leaves fingers 6 and 6' projecting from the expanded terminal portion of the branch tube.  The tube 1 is then inserted within the recess 5 so that the fluid passageway of branch tube 3 is in registry with the opening 2 in the lateral wall of the continuous tube 1 as most clearly shown in Figs. 7 and 8.  The branch tube 3 is then mechanically locked in fixed position on, and at a right angle to continuous tube 1 by pressing fingers 6 and 6' around tube 1 so that the fingers substantially completely encircle the tube at the joint location.  The internal diameter of tube 1 remains constant throughout the joint.  As is apparent from Fig. 9, the fingers are substantially flush with the outer surface of tube 1 so that the inner space between the legs of the continuous tube is essentially free of projections or obstructions from the joint assembly.  The final step in the assembly of the joint is a brazing operation to permantly lock the joint and form a gas tight seal 7.

The joint assembly of the invention uses certain forming steps in common with our aforesaid U.S. patent 3,497,245 the disclosure of which is herein incorporated by reference, and reference should be made to that patent for a more complete disclosure of those steps including the skiving step, the expansion of the diameter of the terminal portion of the branch tube and the brazing of the joint assembly which may consist of the salt bath brazing operation there shown. The skiving operation, unlike equivalent piercing operations of prior art tube joining techniques, does not require a supporting mandrel inside the main tube. The present process utilizes a close fitting encircling containment and the inherent geometric strength of the contained tube to support the tube during piercing. This technique permits the placement of the branch tube anywhere along the length of the main tube. This advantage is unavailable if a mandrel is required unless resort is made to an expensive drilling or milling operation.

The same close fitting encircling containment may be used to support the geometric strength of the tube during the mechanical locking of the fingers of the branch tube around the main tube. This is adequate to prevent distortion of the main tube inside diameter and its related flow restriction.

The present process also provides a strong mechanical lock in brazing or soldering position, permitting the part to be salt bath brazed, flame brazed or continuous belt furnace brazed without the necessity of fixuring the part. Additionally, the brazed or soldered joint provides added material in shear thus yielding greater strength in the joint than conventional saddle type joints where much smaller areas are in tension only.

It will accordingly be seen that the present invention provides a joint assembly which is relatively simple to fabricate and which provides an effective, projection-free joint for small diameter tubing, particularly for aluminum tubing of the type used in air conditioning and refrigeration applications. It is particularly useful for tube joints in which the continuous tube has a sharp bend therein requiring clearance for other components intended for assembly within the bent portion of the tubing.

What Is Claimed Is:

1.  A joint assembly for small diameter tubing comprising:
a continuous tube (1) extending through a joint location, the internal diameter of said tube being constant throughout said joint, the continuous tube (1) having an opening (2) in a lateral wall thereof,

a branch tube (3) extending at an angle from said continuous tube (1) at said joint location and having an expanded portion (4) at said joint location with a diameter slightly larger than the remainder of said branch tube, the interior passageway of said branch tube being in registry with the opening (2) in the lateral wall of the continuous tube

diametrically opposite fingers (6,6') projecting from the expanded terminal portion (4) of the branch tube (3) and substantially completely encircling and meachanically locking the branch tube in fixed position at said joint location, said opposite fingers (6,6') being substantially flush with the outer surface of said continuous tube (1),

said branch tube (3) being metallically sealed to said continuous tube (1) at said joint location to form a fluid tight connection therewith.

2.  The joint assembly of claim 1, in which the continuous tube (1) forms a substantially 180° bend, the joint location being at the apex of the bend.

3.  The joint assembly of claim 1, in which the tubes (1,3) are composed of an aluminium alloy.

4.  The joint assembly of claim 1, in which the branch tube (3) extends at a right angle from said continuous tube.

5.  A process for forming a joint assembly for small diameter tubing comprising

forming an opening in a lateral wall of a continuous tube (1) at a joint location,

expanding the diameter of terminal portion of a
branch tube (3),

forming diametrically opposite fingers (6,6') on the
expanded terminal portion of said branch tube by forming a
recess therein between opposite sides of the terminal portion of
said branch tube (3), the recess having a depth slightly greater
than the diameter of the continuous tube (1),

mechanically locking the branch tube (3) in fixed
position at an angle to the continuous tube (1) by substantially
completely encircling said continuous tube (1) with the fingers
(6,6') of said branch tube at said joint location, the
passageway of the branch tube (3) being in registry with the
opening in the lateral wall of the continuous tube (1), said
opposite fingers (6,6') being substantially flush with the outer
surface of said continuous tube (1), the internal diameter of
the continuous tube (1) remaining constant throughout said joint
and

metallically sealing said branch tube (3) to said
continuous tube (1) at said joint location to form a gas tight
connection therewith.


6.    The process of claim 5 in which the continuous tube
is bent substantially 180° prior to joining the branche tube (3)
to said continuous tube (1), the joint location being at the
apex of said 180° bend.


7.    The process of claim 5 in which the tubes are composed
of an aluminium alloy.


8.    The process of claim 5 in which the branch tube (3)
is locked to the continuous tube (1) at a right angle thereto.

G.A. GIBBS
J. W. EVERETTE
R.W. KRAUSE
1-1-1
(SHEET 1 OF 1)

0168653

FIG. 2

FIG. 4

FIG. 3

FIG. 1

FIG. 5

FIG. 6

FIG. 7

FIG. 8

FIG. 9

FIG. 11

FIG. 10

| | **DOCUMENTS CONSIDERED TO BE RELEVANT** | | EP 85107473.2 |
|---|---|---|---|

| Category | Citation of document with indication. where appropriate, of relevant passages | Relevant to claim | CLASSIFICATION OF THE APPLICATION (Int. Cl 4) |
|---|---|---|---|
| D,A | US - A - 3 497 245 (F.M.METZGER) <br> * Totality * <br> -- | 1,3,4 | F 16 L 41/08 <br> F 16 L 41/00 |
| A | US - A - 4 103 940 (BILLS) <br> * Totality * <br> -- | 1,4 | |
| A | FR - A1 - 2 456 280 (SYNDICAT NATIONAL PROFESSIONEL DES ENTREPRENEURS DE TRAVAUX DE DRAINAGE ET LES PLASTIQUES DE FRANCE) <br> * Totality * <br> ---- | 1,4 | |
| | | | **TECHNICAL FIELDS SEARCHED (Int. Cl 4)** |
| | | | F 16 L 41/00 <br> F 16 L 13/00 |

The present search report has been drawn up for all claims

| Place of search | Date of completion of the search | Examiner |
|---|---|---|
| VIENNA | 18-09-1985 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document. but published on, or after the filing date
D : document cited in the application
L : document cited for other reasons

& : member of the same patent family, corresponding document

EPO Form 1503 03 82